(19) Europäisches Patentamt / European Patent Office / Office européen des brevets

(11) **EP 4 142 519 B1**

(12) **EUROPEAN PATENT SPECIFICATION**

(45) Date of publication and mention
of the grant of the patent:
**09.10.2024   Bulletin 2024/41**

(21) Application number: **21719681.5**

(22) Date of filing: **23.04.2021**

(51) International Patent Classification (IPC):
**A23L 27/20** *(2016.01)*        **A23L 27/21** *(2016.01)*
**A23L 27/23** *(2016.01)*        **A23L 27/26** *(2016.01)*

(52) Cooperative Patent Classification (CPC):
(C-Sets available)
**A23L 27/26; A23L 27/2022; A23L 27/215;
A23L 27/23;** A23V 2200/00                (Cont.)

(86) International application number:
**PCT/EP2021/060685**

(87) International publication number:
**WO 2021/219512 (04.11.2021 Gazette 2021/44)**

(54) **PROCESS FOR THE PREPARATION OF A FLAVOURING**

VERFAHREN ZUR HERSTELLUNG EINES AROMASTOFFES

PROCÉDÉ DE PRÉPARATION D'UN ARÔME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **29.04.2020   EP 20172187**

(43) Date of publication of application:
**08.03.2023   Bulletin 2023/10**

(73) Proprietor: **Unilever IP Holdings B.V.
3013 AL Rotterdam (NL)**

(72) Inventor: **KOEK, Jean, Hypolites
6708 WH Wageningen (NL)**

(74) Representative: **van den Brom, Coenraad Richard
Unilever Patent Group
Bronland 14
6708 WH Wageningen (NL)**

(56) References cited:
WO-A1-2005/096844        WO-A1-2008/025720
WO-A1-2010/037783        WO-A1-2013/140901
WO-A1-2016/185233        CN-C- 100 411 539
JP-A- 2003 169 627        JP-A- 2007 259 744
JP-A- 2010 063 364        KR-A- 20040 060 210
US-A- 4 879 130        US-A1- 2016 213 037
US-A1- 2016 249 649

• "Food Flavourings", 1 January 1995, article P. R.
ASHURST: "Thermal process flavourings",
pages: 276 - 308, XP055542746

(52) Cooperative Patent Classification (CPC): (Cont.)

C-Sets
A23V 2200/00, A23V 2250/042, A23V 2250/218

## Description

### Field of the invention

The present invention relates to a process for the preparation of a flavouring, a flavouring obtainable by said process and a food product comprising said flavouring.

### Background of the invention

Many consumer food products, such as soups, ready meals, bouillon cubes contain flavourings to ensure the product meets the consumer's flavour expectations. Particular attention has been paid to providing meat flavourings for such food products.

Typically, meat flavourings are of synthetic origin, prepared via Maillard and Strecker reactions involving sulphur-containing amino acids and sugars. The sulphur-containing amino acids can be provided by free amino acids for example cysteine, or sulphur amino acid containing peptides, such as glutathione. Sugars used are typically glucose, ribose, arabinose or xylose. Mottram et al., J.Braz. Chem.Soc. 9, 261 (1998) describe combining cysteine and pure inositol monophosphate (IMP, a ribonucleotide) by heating for 1 h at 140 °C under a pressure of 0.28 MPa (2.7 bar), at pH 3.0, 4.5 and 6. A disadvantage of such chemical synthesis is that the resultant savoury flavour cannot be described as 'natural' according to EFFA guidelines. Consumers increasingly desire food products that are labelled as only containing natural ingredients. Consequently, there is a need to provide a process for the preparation of natural savoury flavouring.

JP 2003-169627, Example 1, discloses a process for making a meat flavouring in which 7 parts by weight of 5'-nucleotide-containing yeast extract (manufactured by Kohjin, 5'-nucleotide content 36%), glutathione-containing yeast extract (Yeast Extract Aromild U, glutathione content 8%), 2.5 parts by weight of xylose, 7 parts by weight of powdered dextrin (manufactured by Sanwa Starch Co., Ltd., Sandech # 70) and 14.5 parts by weight of sodium chloride were added to 50 parts by weight of water and heated at 105 °C. for 65 minutes. After completion of the reaction, the reaction solution was dried with a spray drier to obtain a seasoning. A disadvantage of the process of JP 2003-169627 is that pure xylose and dextrin are added, which are derived by chemical means and so the resultant flavouring does not qualify as natural.

A further drawback of the heat mediated, Maillard based seasonings of JP 2003-169627 is an undesirable steamed smell or burnt smell. JP 2016-174587 aims at overcoming this disadvantage by including a proline source. Example 5 discloses a composition comprising 49.0 wt.% glutathione yeast extract, 4.0 wt.% 5'-ribonucleotide-containing yeast extract, 1.4 wt.% fructoglucose syrup, 5.0 wt.% proline -containing yeast extract and 40.6 wt.% water, which composition was heated at 110 °C for 30 minutes.

WO 2010/037783 describes a process for producing a food or feed flavour. Example 1 describes such a process in which a mixture comprising a yeast extract containing 15% w/w of glutathione, 78 % w/w of Gistex LS powder, 1.0% w/w of water, and 1.0% w/w of hydrogenated sunflower oil were fed to a twin screw extruder at a temperature of 175 °C and with a residence time of 1 minute. US2016249649 and JP2007259744 disclose other methods of producing meaty flavors.

There remains a need to provide a process for the preparation of meaty flavourings which meets the consumer and regulatory needs.

### Summary of the invention

The inventors of the present invention have surprisingly found that a flavouring having a meaty flavour is provided by a process in which yeast extract comprising at least 0.5 wt.% of glycosylamine and/or derivatives thereof and at least 1.0 wt.% of thiol containing compounds, wherein the weight percentage is by weight of dry matter of the yeast extract, is heated at a temperature in the range of 150 to 220 °C in the presence of an acid and with the application of shear to the reaction mixture, which is kneaded.

Therefore, in a first aspect of the invention, there is provided a method for the preparation of a flavouring, comprising the steps of:

(i) providing a reaction mixture comprising:

a. yeast extract comprising at least 0.5 wt.% of glycosylamine and/or derivatives thereof and at least 1.0 wt.% of thiol containing compounds, wherein the weight percentage is by weight of dry matter of the yeast extract,
b. at least 1 wt.% of mineral acid or organic acid, by weight of the reaction mixture, and
c. from 0 to 20 wt.% of water by weight of the reaction mixture;

(ii) incubating the reaction mixture at a temperature in the range of 150 to 220 °C, wherein shear is applied to the reaction mixture;

and wherein the reaction mixture is kneaded in step (ii).

Surprisingly, conversion of the thiol containing compounds and glycosylamine and/or derivatives thereof present in the yeast extract(s) proceeds efficiently to provide a meaty flavouring, without the formation of competing off-flavours. The process is very rapid. Due to the limited amount of water that can be used in this process, the resulting flavouring does not typically require an additional drying step.

It was found that the flavouring has excellent sensory properties, and a prolonged shelf life due to the stability of the flavour.

In the incubating step the shear is favourably applied to the reaction mixture by kneading. Therefore, the reaction mixture is preferably kneadable in step (ii) of the method. Advantageously, it was found that the reaction mixture of step (i) can easily be formulated such that it plasticizes at the operating temperature of step (ii), which facilitates the application of shear, especially when the reaction mixture is subjected to a kneading operation.

The present invention has the advantage over prior art methods that chemically processed reducing sugars, such as glucose-fructose syrup, are not required in the reaction mixture, in order to provide a meaty flavour. Consequently, the process according to the present invention meets the required consumer need for natural flavourings.

As a further advantage, the present method does not require the presence of oils (such as vegetable oils) during the incubation step. Therefore, any drawbacks associated with their use (such as burnt oil smells, the development of rancidity and/or the generation of harmful compounds at or above the smoke point of the oil) may suitably be avoided.

According to a second aspect, the invention also provides a flavouring obtainable by a method according to the first aspect of the invention.

The flavouring is preferably in a glassy state and preferably a natural flavouring.

## Detailed description of the invention

The word 'comprising' as used herein is intended to mean 'including' but not necessarily 'consisting of' or 'composed of'. In other words, the listed steps or options need not be exhaustive.

Unless specified otherwise, numerical ranges expressed in the format 'from x to y' or 'x-y' are understood to include x and y. When for a specific feature multiple preferred ranges are described in the format 'from x to y' or 'x-y', it is understood that all ranges combining the different endpoints are also contemplated. For the purpose of the invention ambient temperature is defined as a temperature of about 20°C. Except in the examples and comparative experiments, or where otherwise explicitly indicated, all numbers are to be understood as modified by the word "about".

Unless indicated otherwise, weight percentages (wt.%) are based on the total weight of the composition.

The term "yeast" as used herein, means an organism belonging to the *Saccharomycetaceae* family, preferably to the genus *Saccharomyces.* Yeast in the context of the present invention may be any kind of yeast.

The term "yeast extract" as used herein refers to a composition comprising water soluble components of the yeast cell, the composition of which is primarily amino-acids, peptides, carbohydrates and salts. Yeast extract is produced through the hydrolysis of peptide bonds by the naturally occurring enzymes present in edible yeast and/or or by the addition of food-grade enzymes (Food Chemical Codex), i.e. by autolysis or hydrolysis. A yeast extract, which in the context of the present invention is synonymous with yeast hydrolysate or yeast autolysate, i.e. a soluble extract from yeast comprising hydrolysed protein.

The term "glycosylamine and/or derivatives thereof' refers to a glycosyl group covalently attached to an amino group. A glycosyl group is formed by removing the hydroxy group from the hemiacetal function of a monosaccharide, for example ribose or glucose. The amino group may, for example, be provided by a purine, pyrimidine or pyridine groups. Derivatives may comprise phosphorylated hydroxy groups as in 5'-ribonucleotides.

The term "ribonucleotide" as used herein refers to a mixture of guanosine monophosphate (5'-GMP), cytidine monophosphate (5-CMP), uridine monophosphate (5'-UMP) and further adenosine monophosphate (5'-AMP) and/or inosine monophosphate (5'-IMP), wherein the 5 -IMP in the mixture is obtained by partial or complete conversion of 5'-AMP into 5'-IMP. The term "ribonucleotides" is herein intended to refer to either the free 5'-ribonucleotides or salts thereof. The weight percentage of 5'-ribonucleotides in the yeast extract (wt.%) is based on the weight of the salt free dry matter of the composition and is calculated as disodium salt heptahydrate (2Na.7Aq) of 5'-ribonucelotide. Salt free does not mean that the composition of the invention cannot contain salt, but means that salt is excluded from the composition for the calculation of wt.%." Ribonucleotide and nucleotide are used interchangeably within the scope of the present application.

The term "ribonucleoside" as used herein refers to a mixture of guanosine, cytidine monophosphate, uridine, adenosine and/or inosine.

The amount of ribonucleotide and/or ribonucleoside present in the reaction mixture can be determined by $^1$H

NMR.

The yeast extract according to the invention comprises on the one hand "total dry matter" and on the other hand "water". The sum of the weight of the total dry matter and water is 100% by definition. For instance, a yeast extract may comprise 15 wt.% water and 85% total dry matter.

The "total dry matter" in the yeast extract comprises on the one hand "yeast dry matter" or "salt-free dry matter", on the other hand "non-yeast dry matter" such as (added) salt. The "yeast dry matter" or "salt-free dry matter" in the yeast extract may comprise amino acids, peptides, lipids, polysaccharides, 5'-ribonucleotides etc..

A yeast extract may therefore have the following composition:

95% total dry matter of which 18% salt (sodium chloride) = 19 wt.% of the total dry matter;
65% yeast dry matter of which = 68% of the total dry matter;
12% 5'-ribonucleotides = 18.5% of the yeast dry matter (12/65);
53% others such as amino acids, peptides, lipids, polysaccharides.

The term "acid" as used herein refers to a compound that is a Bronsted acid.

The term "thiol containing compound" as used herein means a compound having at least one -SH group, such as cysteine, as well as a masked -SH compound such as disulphide containing compounds (-S-S-), such as cystine. The total amount of -SH can be determined according to the method in Proteins and Proteomics by Richard J. Simpson. CSHL Press, Cold Spring Harbor, NY, USA, 2003.

According to the present invention, the reaction mixture comprises yeast extract, an acid, and water. Preferably, the reaction mixture comprises, by weight of the reaction mixture, at least 30 wt.% yeast extract, preferably at least 40 wt.% yeast extract, more preferably at least 50 wt.% yeast extract, even more preferably at least 60 wt.%, yet more preferably at least 70 wt.% yeast extract, most preferably at least 80 wt.%. In other words, the reaction mixture comprises yeast extract in the range of 30 to 80 wt.%, by weight of the reaction mixture, preferably the reaction mixture comprises yeast extract in the range of 40 to 75, wt.%, more preferably the reaction mixture comprises yeast extract in the range of 45 to 65, wt.%, by weight of the reaction mixture.

The yeast extract may belong to the family *Saccharomycetaceae*. In one particular embodiment, the yeast is a *Saccharomyces,* e.g. *Saccharomyces cerevisiae* or *Saccharomyces uvarum.* In another embodiment, the yeast is a *Kluyveromyces.,* e.g. Kluyveromyces *fragilis.* In yet another embodiment, the yeast is Candida, e.g. *Candida* utilis, also known as Torula yeast.

For the present method, the yeast extract is suitably provided in the form of a dry material, for example as a dry powder. Thus, it is preferred that the yeast extract comprises up to 5 wt.% of water.

The reaction mixture as defined herein comprises at least 0.5 wt.%, of glycosylamine and/or derivatives thereof and at least 1.0 wt.%, of thiol containing compounds, wherein the weight percentage is by weight of dry matter of the yeast extract. The glycosylamine and/or derivatives thereof and thiol containing compounds may be provided by the same or different yeast extracts. In other words, the glycosylamine and/or derivatives thereof and thiol containing compounds may be provided by a first yeast extract and a second yeast extract, respectively, wherein in certain embodiments the first and second yeast extract can be the same.

In a preferred embodiment, step (i) comprises providing a first yeast extract comprising at least 0.5 wt.%, by weight of dry matter of the first yeast extract, of glycosylamine and/or derivatives thereof and a second yeast extract comprising at least 1.0 wt.% of thiol containing compounds, by weight of dry matter of the second yeast extract.

Preferably, the yeast extract added in step i) comprises at least 1 wt.%, preferably at least 2 wt.%, preferably at least 3 wt.%, preferably at least 5 wt.%, more preferably at least 10 wt.%, even more preferably at least 15 wt.%, and yet more preferably at least 20 wt.%, by weight of dry matter of yeast extract, of glycosylamine and/or derivates thereof.

Typically, the reaction mixture includes a first yeast extract comprising at least 3 wt.% by weight of dry matter of the first yeast extract of glycosylamine and/or derivates thereof, in the range of 20-80 wt.%, more preferably in the range of 30-60 wt.%, even more preferably in the range of 40-50 wt.%, by weight of the reaction mixture.

The first yeast extract preferably comprises at least 10 wt.% by weight of dry matter of the first yeast extract of glycosylamine and/or derivates thereof.

The reaction mixture typically includes a second yeast extract comprising at least 1 wt.% by weight of dry matter of the second yeast extract of thiol containing compounds, in the range of 20-80 wt.%, more preferably in the range of 30-60 wt.%, even more preferably in the range of 40-50 wt.%, by weight of the reaction mixture.

The second yeast extract preferably comprises at least 3 wt.% by weight of dry matter of the second yeast extract of thiol containing compounds.

The reaction mixture preferably includes the first yeast extract and the second yeast extract in relative amounts suitable to provide the desired weight ratio and/or molar ratio of the glycosylamine and/or derivatives thereof and the thiol containing compounds as expressed herein.

Preferably, the reaction mixture includes yeast extract comprising glycosylamine and/or derivatives thereof and thiol containing compounds, in the range of 50-99 wt.%, more preferably in the range of 60-98 wt.%, even more preferably in the range of 75-95 wt.%, by weight of the reaction mixture.

It is particularly preferred that appropriate combinations of glycosylamines and thiol containing compounds are used. Therefore, it is preferred that step i) comprises providing yeast extract that comprises at least 1.5 wt.%, by weight of dry matter of yeast extract, glycosylamine and/or derivatives thereof and at least 1 wt.% thiol containing compounds, by weight of dry matter of yeast extract.

It is more preferred that step i) comprises providing a yeast extract that comprises at least 1 wt.%, more preferably at least 2 wt.% and even more preferably at least 3 wt.% by weight of dry matter of the yeast extract, of glycosylamine and/or derivatives thereof and at least 2 wt%, more preferably at least 4 wt% of thiol-containing compounds by weight of dry matter of the yeast extract.

It is even more preferred that the first yeast extract comprises at least 5 wt.%, more preferably at least 10 wt.% by weight of dry matter of yeast extract of glycosylamine and/or derivatives thereof and the second yeast extract comprises at least 2 wt.%, more preferably at least 3 wt.%, even more preferably at least 10 wt% of thiol-containing compounds by weight of dry matter of the yeast extract.

In a preferred embodiment, the glycosylamine and/or derivatives thereof contains a ribose moiety. It has been found that processes according to the invention in which ribose containing glycosylamines are used, compounds such as 2-methyl-3-furanthiol, 2 methyl-3-(methylthio)furan and bis-(2-methyl-3-furyl) disulphide are formed, which furan containing compounds give a characteristic meaty aroma.

In certain embodiments, the glycosylamine and/or derivative thereof is a ribonucleotide and/or ribonucleoside. Preferably the yeast extract comprises at least 0.5 wt.%, preferably at least 1 wt.%, preferably at least 5 wt.%, more preferably at least 10 wt.%, even more preferably at least 15 wt.%, most preferably at least 20 wt.%, by weight of dry matter of yeast extract, of ribonucleotide.

In another preferred embodiment, the glycosylamine is a ribonucleotide and/or ribonucleoside. Without wishing to be bound by theory, the inventors postulate that heating the ribonucleotide in the presence of acid leads to the ribonucleotide and/or ribonucleotide degrading to release ribose which can take part in reactions with the thiol containing compounds present to generate the flavouring compounds.

It is thus preferred that the reaction mixture of step (i) comprises the glycosylamine and/or derivatives thereof in an amount of between 2 and 15 wt.%, more preferably between 3 and 12 wt%, even more preferably between 5 and 11 wt%, by weight of the reaction mixture.

The thiol containing compounds may be proteins, peptides or amino acids which comprise -SH groups. In other words, thiol groups may be present as "free amino acids" or as part of peptides and/or proteins. Preferably, the thiol containing compounds are peptides comprising glutathione or cysteine, preferably glutathione. Thus, it is preferred that the thiol containing compounds are glutathione, cysteine, and/or cysteine-containing dipeptides, and more preferably glutathione.

In a preferred embodiment, the yeast extract comprises at least 2 wt.%, preferably at least 5 wt.%, preferably at least 10 wt.%, more preferably at least 15 wt.%, even more preferably at least 20 wt.%, most preferably at least 25 wt.%, by weight of dry matter of yeast extract, thiol containing compounds.

It is preferred that the reaction mixture of step (i) comprises the thiol containing compounds in an amount of between 1 and 15 wt.%, more preferably between 2 and 12 wt%, even more preferably between 3 and 10 wt% and still more preferably between 4 and 8 wt% by weight of the reaction mixture.

In order to optimise the reaction conditions, it is preferred that the reaction mixture of step (i) comprises the glycosylamine and/or derivatives thereof and the thiol containing compounds in a weight ratio of between 5:1 and 1:5, preferably between 4:1 and 1:2, even more preferably between 3:1 and 1:1, and still more preferably between 3:2 and 5:2.

Thus it is preferred that the glycosylamine and/or derivatives thereof and the thiol containing compounds are present in the reaction mixture in a weight ratio of about 2:1.

The ratios of these compounds may also be expressed in terms of molar ratios. Thus, it is preferred that the reaction mixture of step (i) comprises the glycosylamine and/or derivatives thereof and the thiol containing compounds in a molar ratio of between 5:1 and 1:5, preferably between 4:1 and 1:2, even more preferably between 3:1 and 1:1, and still more preferably between 3:2 and 5:2.

Thus it is preferred that the glycosylamine and/or derivatives thereof and the thiol containing compounds are present in the reaction mixture in a molar ratio of about 2:1.

It is preferred that yeast extract is the source of at least 80 wt.%, more preferably at least 90 wt.%, even more preferably at least 95% and still more preferably at least 99 wt.% of the totality of glycosylamine and/or derivatives thereof and thiol-containing compounds in the reaction mixture. Thus, it is particularly preferred that substantially all or even all of the totality of glycosylamine and/or derivatives thereof and thiol-containing compounds in the reaction mixture are sourced from yeast extract.

*Mineral or organic acid*

The reaction mixture as defined herein comprises an acid. The acid is capable of promoting the flavour enhancing reactions taking place during the incubation of step (ii). Preferably the acid is a mineral acid or an organic acid, preferably an organic acid.

In case the acid is an organic acid, it is preferred that the reaction mixture comprises at least 1 wt.% of an organic acid, wherein the organic acid has a first dissociation constant ($pK_a$) at 25°C in water of 4.35 or less, preferably 4.1 or less, more preferably 4.0 or less and even more preferably 3.9 or less.

Suitable examples of organic acids with corresponding first pKa values in water at 25°C are listed in Table 1, representing data from *DISSOCIATION CONSTANTS OF ORGANIC ACIDS AND BASES*, Handbook Chemistry & Physics 88ed.

**Table 1**

| Acid | pKa |
|---|---|
| Lactic acid | 3.86 |
| Succinic acid | 4.21 |
| Malic acid | 3.40 |
| DL-Tartaric acid | 3.03 |
| meso-Tartaric acid | 3.17 |
| L-Ascorbic acid | 4.04 |
| Citric acid | 3.13 |
| Glycolic acid | 3.83 |
| Pyruvic acid | 2.39 |
| Formic acid | 3.75 |
| Glyoxylic acid | 3.18 |
| Oxalic acid | 1.25 |
| Propanoic acid | 4.87 |
| Glyceric acid | 3.52 |
| Maleic acid | 1.92 |
| Fumaric acid | 3.02 |
| Glutaric acid | 4.32 |
| Benzoic acid | 4.204 |

Preferably, the organic acid is selected from the group consisting of ascorbic, lactic acid, malic acid, citric acid, succinic acid, tartaric acid, oxalic acid, glyceric acid, succinic acid; sugar acids like: gluconic acid, glucuronic acid, glucaric acid, mannuronic acid, aromatic acids like benzoic acid, para-hydroxybenzoic acid, catechuic acid, gallic acid, ferulic acid, quinic acid and mixtures thereof. The organic acid is, preferably selected from the group consisting of ascorbic acid, lactic acid, malic acid and citric acid, succinic acid, tartaric acid, more preferably, the organic acid is selected from the group consisting of lactic acid, malic acid and citric acid, tartaric acid, succinic acid and ascorbic acid, and combinations thereof. More preferably, the organic acid is selected from the group consisting of lactic acid, ascorbic acid and malic acid and combinations thereof. Even more preferably the organic acid is lactic acid.

It is also preferred that the organic acid is a non-zwitterionic acid.

Preferably, the reaction mixture comprises at least 2 wt.% of the acid, based on the total weight of the reaction mixture, more preferably at least 2.5 wt.%, based on the total weight of the reaction mixture.

Preferably, the reaction mixture comprises from 1.0 to 20 wt.%, more preferably from 2 to 15 wt.%, and even more preferably from 5 to 10 wt.% of mineral acid or organic acid, based on the total weight of the reaction mixture.

In a preferred embodiment, step i) comprises the step of adding an acid to the yeast extract. Preferably, the amount of acid added is the range of 0.1-2 parts by weight acid is added to 1-10 parts by weight yeast extract comprising at least 0.5 wt.%, by weight of dry matter of yeast extract, glycosylamine and/or derivatives thereof.

*Water*

The reaction mixture as defined herein comprises from 0 to 20 wt.% of water, by weight of the reaction mixture. Preferably, the reaction mixture comprises water in an amount of between 0.2 wt.% and 18 wt.%, more preferably between 0.3 wt.% and 15 wt.%, even more preferably between 0.4 wt.% and 12 wt.%, still more preferably between 0.5 wt.% and 6 wt.% and yet more preferably between 0.8 and 2 wt% by weight of the reaction mixture. The relatively low amount of water that is needed in the method of the present invention promotes the flavour development during the incubation step. Furthermore, the low amount of water also enables a process in which no further drying step is required.

The yeast extract may comprise some water and so may typical suitable sources of the acid used in the method. Therefore, the desired amount of water (if any) in the reaction mixture of step (i) may be provided by the yeast extract, by the source of acid, or it may be added separately.

In a preferred embodiment, the reaction mixture comprises:

a. 75-95 wt.% yeast extract comprising at least 1 wt.%, by weight of dry matter of yeast extract, glycosylamine and/or derivatives thereof and at least 2 wt.%, by weight of dry matter of yeast extract thiol containing compounds,
b. 5-15 wt.%, more preferably 8-12 wt.%, by weight of the reaction mixture, of acid,
c. 0-10 wt.%, more preferably 0 to 2 wt.% by weight of the reaction mixture, of water.

In a preferred embodiment, the method according to the present invention does not comprise a step of separately adding a reducing sugar. By 'separately' is meant in addition to the yeast extract. A reducing sugar is a saccharide that comprises a hemiacetal or hemiketal group. Examples of reducing sugars are fructose, glucose, ribose, xylose, maltodextrin, dextrin, glucose syrup.

*Fat or oil*

In some preferred embodiments, the process is carried out in the presence of fat or oil. The terms "fat" and "oil" are used interchangeably, unless specified otherwise. Where applicable the prefix "liquid" or "solid" is added to indicate if the fat or oil is liquid or solid at ambient temperature as understood by the person skilled in the art.

Thus, the reaction mixture preferably comprises a triglyceride-based oil as understood by the person skilled in the art. The terms 'triacylglycerols', 'TAGs', and 'triglycerides' are used interchangeably; they refer to esters of glycerol and three fatty acids. The fatty acid (moieties) of the TAGs may vary in length. The length of a fatty acid is commonly indicated by their carbon number. The fatty acid (moieties) may be saturated, monounsaturated or polyunsaturated.

Preferably, the reaction mixture comprises 0.1 to 5 wt-%, more preferable 0.2 to 4 wt%, even more preferably 0.5 to 2 wt-% and still more preferably 0.6 to 1.5 wt% by weight of the reaction mixture of oil and/or fat.

Examples of sources of conventional suitable oils and fats include coconut oil, palm kernel oil, palm oil (and fractions thereof including palm olein and palm stearin), marine oils (including fish oil), lard, tallow fat, butter fat, chicken fat, soybean oil, safflower oil, cotton seed oil, rapeseed oil, linseed oil, sesame oil, poppy seed oil, corn oil (maize oil), sunflower oil, peanut oil, rice bran oil, olive oil, algae oil, shea fat, and alanblackia and blends thereof. For the purpose of this invention, algae oils are considered vegetable oils.

Preferably, the reaction mixture comprises an oil selected from soybean oil, sunflower oil, rape seed (canola) oil, cotton seed oil, peanut oil, rice bran oil, safflower oil, palm olein, linseed oil, fish oil, high omega-3 oil derived from algae, corn oil (maize oil), sesame oil, palm kernel oil, coconut oil, olive oil, and combinations thereof. More preferably the oil is selected from soybean oil, sunflower oil, rape seed oil, corn oil (maize oil), olive oil, linseed oil, palm olein and combinations thereof.

*Incubation step*

In order to develop a desirable flavour profile, the reaction mixture in step (ii) is incubated at elevated temperatures. The reaction mixture is incubated at a temperature in the range of 150 to 220°C, more preferably at a temperature in the range of 160°C to 200°C, even more preferably of 165° to 195°C and still more preferably 170° to 190°C.

In the incubation step (ii), shear is applied to the reaction mixture. Without shear the process would result in undesirable off flavours or malodours, such as sulfury flavours or smells, or burnt notes. Such off flavours and malodours would render the flavouring unsuitable for use. Advantageously, the combination of using no or only a low amount of water in the reaction mixture in combination with shear at the elevated temperature of step (ii), enables the incubation to take place without the need to control high hydrostatic pressures as would have been the case when the incubation were carried out in an aqueous medium.

The shear is favourably applied to the reaction mixture by kneading it. Thus, the reaction mixture is kneaded in step (ii). Therefore, the reaction mixture is preferably kneadable in step (ii) of the method. A kneadable consistency is straightforwardly arrived at for a given yeast extract as specified, for instance by suitable adjustment of the water level and operating temperature. Thus, the reaction mixture of step (i) can easily be formulated such that it plasticizes at the operating temperature of step (ii), which facilitates the application of shear, especially when the reaction mixture is subjected to a kneading operation. The shear that is applied is also believed to contribute to the plasticising of the reaction mixture.

Plasticising the reaction mixture is believed to contribute to its kneadability. Therefore, it is preferred that in step (ii) the reaction mixture is plasticised. Analogously, it is preferred that the reaction is in the form of a melt, as this also contributes to kneadability.

The incubation step may be carried out in any suitable apparatus, that is able to provide the required temperature and shear. Both batch processes and continuous processes are contemplated. In a preferred realisation of the method, the reaction mixture in step ii) is incubated in a continuous process. Thus, it is particularly preferred that the reaction mixture in step ii) is incubated in an extruder, more preferably in a twin-screw extruder. An extruder, especially a twin-screw extruder thus provides a favourable way to knead the reaction mixture in step (ii).

During incubation, a complex combination of chemical reactions results in the development of compounds that affect the sensory profile of the reaction mixture and in that way turn it into a flavouring composition, with optimal sensory properties. These properties may include the taste, flavour, olfactory profile, visual appearance and solubility/dispersability upon application in a food product. Therefore, the reaction mixture in step ii) is preferably incubated with a reaction time sufficient for the flavouring to develop. If the reaction mixture is incubated too short the flavouring will not develop its optimal sensory profile. If it is incubated too long, the flavouring may develop off-flavours, burnt notes, and for example a burnt, dark-brown or blackened appearance.

For example, it is preferred that the reaction mixture in step ii) is incubated with a reaction time between 0.5 and 15 minutes, more preferably between 1 and 10 minutes, and even more preferably between 2 and 5 minutes.

The optimal incubation time may correlate with the temperature at which the reaction mixture is incubated. Thus, the reaction mixture is preferably incubated for a time t (minutes) according to the formula:

$$t = 240000 \cdot e^{-bT}$$

wherein the temperature is selected within the range specified for step (ii) - e.g. as $150°C \leq T \leq 220°C$ - and $0.06 \leq b \leq 0.075$. Appropriate flavour development is typically observed within these limits. More preferably, $0.062 < b < 0.072$.

Thus, the reaction mixture is preferably incubated at a temperature in the range of 170 to 190 °C for a time in the range of 0.5 to 15 minutes, preferably in the range of 1 to 10 minutes, more preferably 2 to 5 minutes.

In a preferred embodiment, the reaction mixture is heated for at least 5 minutes at 160°C, preferably at least 10 minutes at 160°C and preferably at most 20 minutes at 160°C.

In a preferred embodiment, the reaction mixture is heated for at least 2 minutes at 170°C, preferably at least 3 minutes at 170°C and preferably at most 10 minutes at 170 °C.

In a preferred embodiment, the reaction mixture is heated for at least 1.5 minutes at 180°C, preferably at least 2.5 minutes at 180°C, and preferably at most 6 minutes at 18°C.

In a preferred embodiment, the reaction mixture is heated for at least 1 minute at 190°C, preferably at least 2 minutes at 190°C, and preferably at most 4 minutes at 190°C.

In a preferred embodiment, the reaction mixture is heated for at least 0.5 minutes at 200°C, preferably at least 1 minute at 200°C, and preferably at most 2 minutes at 200°C.

The method according to the first aspect of the invention preferably is a natural method for the preparation of a flavouring. The natural method typically complies with the requirements for naturalness as defined in EU regulation 2008-1334.

In a particularly preferred realisation of the method, the incubated reaction mixture is cooled to form a solid or a glassy state, more preferably a glassy state. Such a state is typically developed in case the reaction mixture is plasticised and or in the form of a melt in the incubation step (ii). The glassy or solid state is advantageous since it is believed to contribute to the stability and the shelf life of the flavouring.

For ease of handling and dosing, the incubated reaction mixture is preferably further subjected to a size reduction step, more preferably a comminution step, or even more preferably a milling and/or grinding step. Any particle size that is suitable for further application as a flavouring in a food product is contemplated.

The acidity of the incubated reaction mixture contributes to its sensory properties, its stability and its shelf life. Therefore, it is preferred that the incubated reaction mixture has an acidity such that a test solution consisting of 1 wt.% of the incubated reaction mixture and 0.5 wt.% of sodium chloride in water has a pH in the range of from 3.5 to 6.0, more preferably in the range of from 4.0 to 5.0 at 20 °C. Stabilising the flavour of the flavouring is believed to be highly beneficial in formulating the flavouring in food products. Conversely, it has been found that when the pH is above 6, off-flavours may dominate the aroma. The acidity of the incubated reaction mixture can easily be controlled by appropriate selection of the amount and type of acid in the reaction mixture. The exact amounts are believed to vary for instance with the nature and amounts of the components of the yeast extract in the reaction mixture (as specified in step (i)). This may for example be related to the buffering activity of some of its constituents.

The method of the present invention preferably yields a flavouring with a shelf life of at least 3 months, more preferably at least 6 months and still more preferably at least 12 months, upon storage under dry conditions.

Combinations of preferred features are also contemplated for the method according to the first aspect of the invention.

For example, it is particularly preferred that the method for the preparation of a flavouring comprises the steps of:

(i) providing a reaction mixture comprising:

a. yeast extract comprising at least 0.5 wt.% of ribonucleotides and at least 1.0 wt.% of glutathione, wherein the weight percentage is by weight of dry matter of the yeast extract,
b. at least 1 wt.% of lactic acid, and
c. from 0 to 20 wt.%, more preferably from 0.5 to 5 wt.% of water by weight of the reaction mixture;

(ii) incubating the reaction mixture at a temperature in the range of 150 to 220 °C, wherein shear is applied to the reaction mixture by kneading and preferably with a reaction time sufficient for the flavouring to develop or with a reaction time t (minutes) according to the formula:

$t = 240000 \cdot e^{-bT}$ where: $150°C \leq T \leq 220°C$, and $0.06 \leq b \leq 0.075$

(iii) allowing the incubated reaction mixture to cool and form a flavouring in a solid or glassy state and optionally further comminuting the solid or glassy incubated reaction mixture.

In a second aspect, the present invention relates to a flavouring obtainable by the method as defined herein. The flavouring preferably is a natural flavouring. A natural flavouring that typically complies with the requirements for naturalness as defined in EU regulation 2008-1334.

Preferably, the flavouring comprises yeast extract comprising:

i. at least 20 mg/g of ribonucleotides,
ii. at least 20 mg/g of organic acids,
iii. at least 0.1 mg/g of glutathione (sum of reduced and oxidized)
iv. preferably at least 1 mg/g of pyroglutamate,
v. preferably at least 1 mg/g of cyclo-cysteinyl-glycine,

and wherein a 1 wt.% solution of said composition in water also comprising 0.5 wt.% of sodium chloride has a pH in the range of 3.5 to 6 at 20 °C.

Typically, the total amount of proteinaceous matter (amino acids, oligopeptides, and polypeptides) contained in yeast extract lies between 50 and 75 wt-% by weight of dry matter.

Therefore, the flavouring preferably comprises per gram of proteinaceous matter:

a. at least 10 mg, preferably at least 15 mg of ribonucleotides,
b. at least 10 mg, preferably at least 15 mg of organic acid,
c. at least 0.05 mg, preferably at least 0.075 mg of glutathione (sum of reduced and oxidized),
d. at least 0.5 mg, preferably at least 0.75 mg of pyroglutamate,
e. at least 0.5 mg, preferably at least 0.75 mg of cyclo-cysteinyl-glycine; and wherein a 1 wt.% solution of said composition in water also comprising 0.5 wt.% of sodium chloride has a pH in the range of 3.5 to 6 at 20 °C.

Preferably, the meaty aroma / flavour can be determined by sensory evaluation of an aqueous solution containing 0.01-0.5 wt.%, by weight of dry mass, of the flavouring obtainable by the method defined herein, preferably 0.02-0.2 wt.%, by weight of dry mass of the flavouring obtainable by the method defined herein.

Advantageously, the cooled flavouring material (obtained from the method of the invention) is solid or in a glassy state and can be kept as a stable component, when protected against water take-up, and can be optionally further processed and applied in formulations without the requirement of (vacuum) drying or any other protective measures to stabilise the flavour.

Thus, the natural flavouring composition preferably is in a glassy state.

Consequently, it is also possible to formulate the flavouring without drying agents or a carrier.

The natural flavouring composition preferably is substantially free from thiamine and sulfurol.

In a third aspect, the present invention relates to a flavouring composition comprising yeast extract comprising, based on dry yeast extract:

    i. at least 20 mg/g, of ribonucleotides,
    ii. at least 20 mg/g, of organic acids,
    iii. at least 0.1 mg/g of glutathione,
    iv. preferably at least 1 mg/g of pyroglutamate,
    v. preferably at least 1 mg/g of cyclo-cysteinyl-glycine
    vi. and wherein the composition is preferably free from thiamine and sulfurol.

Preferably, a 1 wt.% solution of said composition in water also comprising 0.5 wt.% of sodium chloride has a pH in the range of 3.5 to 6 at 20 °C.

In a fourth aspect, the present invention relates to a flavouring comprising per gram of proteinaceous matter:

    a. at least 10 mg, preferably at least 15 mg of ribonucleotides,
    b. at least 10 mg, preferably at least 15 mg of organic acid,
    c. at least 0.05 mg, preferably at least 0.075 mg of glutathione (sum of reduced and oxidized),
    d. at least 0.5 mg, preferably at least 0.75 mg of pyroglutamate,
    e. at least 0.5 mg, preferably at least 0.75 mg of cyclo-cysteinyl-glycine; and wherein a 1 wt.% solution of said composition in water also comprising 0.5 wt.% of sodium chloride has a pH in the range of 3.5 to 6 at 20 °C.

The flavouring preferably is in a glassy state. Moreover, the flavouring is preferably a natural flavouring.

In a fifth aspect, the present invention relates to a method of preparing a savoury food product comprising combining 0.001-1wt.% of a flavouring composition prepared according to the process defined herein, with one or more food ingredients.

In a sixth aspect, the present invention relates to the use of a composition comprising yeast extract comprising, based on dry yeast extract:

    i. at least 20 mg/g, of ribonucleotides,
    ii. at least 20 mg/g, of organic acids,
    iii. at least 0.1 mg/g of glutathione,
    iv. preferably at least 1 mg/g of pyroglutamate,
    v. preferably at least 1 mg/g of cyclo-cysteinyl-glycine
    vi. and wherein the composition is preferably substantially free from thiamine and sulfurol,

to provide a meaty aroma to savoury food products.

In the context of the present application "substantially free from thiamine" means less than 1 mg/g, preferably less than 0.1 mg/g, preferably less than 0.01 mg/g.

In the context of the present application "substantially free from sulforol means less than 0.1 mg/g and substantially free from sulfurol, preferably less than 0.01 mg/g.

Preferably, a flavouring obtainable by a method as defined herein comprises compounds such as 2-methyl-3-furanthiol, 2 methyl-3-(methylthio)furan and bis-(2-methyl-3-furyl) disulphide.

Savoury food products as used herein refer to food products such as soups, sauces, bouillons, bouillon cubes, meal kits, dressings and marinades.

In a seventh aspect, the present invention relates to use of a mineral or organic acid as a flavour development promoting agent in a reaction mixture also comprising

    a. yeast extract comprising at least 0.5 wt.% of glycosylamine and/or derivatives thereof and at least 1.0 wt.% of thiol containing compounds, wherein the weight percentage is by weight of dry matter of the yeast extract, and
    b. from 0 to 20 wt.% of water by weight of the reaction mixture,

wherein the reaction mixture is plasticised or in the form of a melt. Preferably, the acid is a meaty flavour development promoting agent.

In an eighth aspect, the present invention relates to use of a mineral or organic acid as a flavouring shelf-life enhancing agent in a reaction mixture also comprising

    a. yeast extract comprising at least 0.5 wt.% of glycosylamine and/or derivatives thereof and at least 1.0 wt.% of thiol containing compounds, wherein the weight percentage is by weight of dry matter of the yeast extract, and
    b. from 0 to 20 wt.% of water by weight of the reaction mixture,

wherein the reaction mixture is plasticised or in the form of a melt.

Likewise, in a ninth aspect, the present invention relates to use of a mineral or organic acid as a flavouring shelf-life enhancing agent in a flavouring obtainable by a method for the preparation of a flavouring, comprising the steps of:

(i) providing a reaction mixture comprising:

a. yeast extract comprising at least 0.5 wt.% of glycosylamine and/or derivatives thereof and at least 1.0 wt.% of thiol containing compounds, wherein the weight percentage is by weight of dry matter of the yeast extract,
b. at least 1 wt.% of the mineral acid or organic acid, by weight of the reaction mixture, and
c. from 0 to 20 wt.% of water by weight of the reaction mixture; and

(ii) incubating the reaction mixture at a temperature in the range of 150 to 220 °C, wherein shear is applied to the reaction mixture.

The reaction mixture in step (ii) is preferably plasticised or in the form of a melt.

The method preferably also includes the step (iii) of allowing the incubated reaction mixture to cool, thereby preferably bringing the flavouring into the form of a solid or a glassy state.

Any preferences described hereinabove with regard to the method of the first aspect of the invention and/or the flavouring according to the second aspect of the invention are analogously contemplated for the flavourings according to the third and fourth aspect and the use according to the sixth, seventh, eighth and ninth aspects, respectively. In particular, the acid in these aspects preferably is an organic acid and more preferably it is lactic acid. Use of a mineral or organic acid simultaneously for two or three of the uses according the seventh, eighth and ninth aspects of the invention is also contemplated.

The various features of the present invention referred to in individual sections above apply, as appropriate, to other sections mutatis mutandis. Consequently, features specified in one section may be combined with features specified in other sections as appropriate. Any section headings are added for convenience only, and are not intended to limit the disclosure in any way.

The present invention will now be illustrated with the following non-limiting examples.

## Examples

### Materials & Methods

NUC-YEP: Yeast Extract Powder ex Biospringer, 18% salt. $^1$H-NMR analysis indicates 147 mg/g ribonucleotides.

GSH-YEP: Yeast Extract Powder Aromild U-15 ex Kohjin, < 1% salt. Analysis according to the specification by Kohjin: 164.9 mg/g reduced glutathion, 33.6 mg/g ribonucleotides. Lactic acid was obtained from Corbion, Netherlands (containing 85 wt.% of lactic acid and 15 wt.% of water).

*Determination of Dry matter*

The content of dry matter can for instance be assessed by drying a sample of the material in a vacuum oven at 110°C for at least 8 hours or until a constant sample weight is obtained.

*Conical Shear Cell apparatus*

A conical shear cell device as described by S. H. Peighambardoust, A. J. van der Goot, R.J. Hamer and R. M. Boom in Cereal Chemistry 81(6):714-721, "A New Method to Study Simple Shear Processing of Wheat Gluten-Starch Mixtures" was used to apply a well-defined deformation to the material at a controlled temperature.

*Measurement of the pH*

A solution of 1% of the reaction mixture was prepared in 5 g/L salt water and pH was measured at 20 °C using a pH meter with a glass electrode.

*Sensory assessment*

Immediately after preparation a sample which was allowed to cool was subjected to olfactory analysis by a trained expert panel of 3 to 5 scientists. The result was scored as follows: + indicates good meat flavour, ++ indicates strong meat flavour, - indicates sulfury off flavour

**Comparative example A**

A mixture of yeast extracts consisting of 9 parts by weight of Nuc-YEP, 4.5 parts by weight of GSH-YEP and 1.5 part by weight of Lactic acid was placed in a pressure-resistant laboratory glass bottle. The bottle was closed tightly and placed in a preheated oil bath at 165 °C for 5 minutes. The bottle was removed from the oil bath and allowed to cool to 90 °C. The resulting mixture was somewhat plasticized and brown in some parts, difficult to remove and in other parts had not reacted at all. From the inhomogeneous mixture a chicken flavour was noticed but also some sulfury off note.

**Example 1**

A mixture of yeast extracts consisting of 9 parts by weight of Nuc-YEP, 4.5 parts by weight of GSH-YEP, 1.5 parts by weight of Lactic acid and 1.5 parts by weight of added water was placed in the Conical Shear Cell (CSC) apparatus. Upon closing the CSC, the mixture was heated to 170 °C and subsequently a rotation speed of 30 rpm was applied for 3 minutes. A medium torque was observed (1.6 Nm) indicating a good kneading. The rotation was stopped, and the CSC allowed to cool to 90 °C before opening. The resulting homogenous, smooth light brown-coloured mixture was removed and after further cooling to ambient, the mixture turned solid and a strong meat flavour was noticed. No sulfury off flavour was observed.

**Example 2**

A mixture of yeast extracts consisting of 9 parts by weight of Nuc-YEP, 4.5 parts by weight of GSH-YEP, 1.5 parts by weight of Lactic acid and 1.5 parts by weight of water was placed in a Conical Shear Cell (CSC) apparatus. Upon closing the CSC, the mixture was heated to 170 °C and subsequently a rotation speed of 60 rpm was applied for 3 minutes. A medium torque was observed (1.2 Nm) indicating a good kneading. The rotation was stopped, and the CSC allowed to cool to 90 °C before opening. The resulting homogenous, smooth light brown coloured mixture was removed and after further cooling to ambient, the mixture turned solid and a strong meat flavour was noticed. No sulfury off flavour was observed.

**Example 3**

A mixture of yeast extracts consisting of 9 parts by weight of Nuc-YEP, 4.5 parts by weight of GSH-YEP and 1.5 parts by weight of Lactic acid, was placed in a Conical Shear Cell (CSC) apparatus. Upon closing the CSC, the mixture was heated to 160 °C and subsequently a rotation speed of 30 rpm was applied for 3 minutes. A high torque was observed (4.9 Nm) indicating a good kneading. The rotation was stopped, and the CSC allowed to cool to 90 °C before opening. The resulting mixture was removed and after further cooling to ambient, the homogenous, cream coloured mixture turned to a powder and a meaty flavour was noticed. No sulfury off flavour was observed.

**Example 4**

A mixture of yeast extracts consisting of 9 parts by weight of Nuc-YEP, 4.5 parts by weight of GSH-YEP-2 and 1.5 parts by weight of Lactic acid, was placed in a Conical Shear Cell (CSC) apparatus. Upon closing the CSC, the mixture was heated to 170 °C and subsequently a rotation speed of 30 rpm was applied for 3 minutes. A high torque was observed (4.9 Nm) indicating a good kneading. The rotation was stopped, and the CSC allowed to cool to 90 °C before opening. The resulting mixture was removed and after further cooling to ambient, the homogenous, light brown coloured mixture turned to a brittle solid and a strong meat flavour was noticed. No sulfury off flavour was observed.

**Example 5**

A mixture of yeast extracts consisting of 9 parts by weight of Nuc-YEP, 4.5 parts by weight of GSH-YEP and 1.5 parts by weight of Lactic acid, was placed in a Conical Shear Cell (CSC) apparatus. Upon closing the CSC, the mixture was heated to 180 °C and subsequently a rotation speed of 30 rpm was applied for 3 minutes. A high torque was observed (4.9 Nm) indicating a good kneading. The rotation was stopped, and the CSC allowed to cool to 90 °C before opening. The resulting mixture was removed and after further cooling to ambient, the homogenous, dark brown coloured mixture turned to a brittle solid and a strong meat flavour was noticed with some roasty notes. No sulfury off flavour was observed.

In all of the Examples A and 1 to 5, the yeast extracts are used in a weight ratio of GSH-YEX : Nuc-YEX = 1:2. This ratio corresponds to a mass ratio of glutathion to ribonucleotides of 1:2 and a molar ratio of ca 1:1.8.

**Table 2**

| Ex. | Method | Temp | Time | GSH-YEP (wt. %) | Nuc-YEP (wt. %) | Water added | Lactic acid | Total Water* | Meat Flavour | Off flavour |
|---|---|---|---|---|---|---|---|---|---|---|
| A¶ | Bottle | 165 °C | 5 min | 30% | 60% | 0 | 10% | 1.5% | + - | YES |
| | | | | | | | | | | |
| 1 | CSC | 170 °C | 3 min | 27% | 54% | 10% | 9% | 11.35% | ++ | NO |
| 2 | CSC | 170 °C | 3 min** | 27% | 54% | 10% | 9% | 11.35% | ++ | NO |
| 3 | CSC | 160 °C | 3 min | 30% | 60% | 0 | 10% | 1.5% | + | NO |
| 4 | CSC | 170 °C | 3 min | 30% | 60% | 0 | 10% | 1.5% | ++ | NO |
| 5 | CSC | 180 °C | 3 min | 30% | 60% | 0 | 10% | 1.5% | ++ | NO |
| ¶: Comparative example *: added water + water from the lactic acid **: CSC operated at 2x the rotation speed (30 RPM to 60 RPM) | | | | | | | | | | |

**Examples 6 to 9 and B to F**

Further Examples were prepared as follows. All materials and methods are identical to the above, except where noted. For each example, a reaction mixture as detailed in Table 3 was placed in the Conical Shear Cell (CSC) apparatus. Upon closing the CSC, the mixture was heated to the temperature as indicated in Table 3 and subsequently a rotation speed of 30 rpm was applied (except for comparative example E), for the time as indicated in Table 3. A medium torque was observed indicating good kneading for all compositions (except comparative example E). The rotation was stopped, and the CSC allowed to cool to 90 °C before opening. The resulting mixture was removed and after further cooling to ambient, the mixture turned solid.

*Sensory assessment*

After preparation and cooling a reaction mixture, it was subjected to sensory analysis by a trained expert panel of 3 to 5 scientists. The panel smelled and tasted a sample of 0.2 wt% of the mixture and 0.5% salt in warm water.

*Results*

The results are summarised in Table 3. Table 4 provides more details of the sensory analysis. Comparative examples B, C, D, and E demonstrate that no meat flavour, but only off-flavours are obtained if the glycosylamine (B), or the thiol containing compounds (C), or the acid (D) is not present, or if no kneading is applied (E). Comparative example F demonstrates that no acceptable flavour is obtained if oil is introduced but the acid is not present.

In contrast, Examples 6, 7, and 8 demonstrate that meat flavours can be prepared at different temperatures and reaction times, with no off-flavours. They also demonstrate how the flavour can be customised by varying temperature and time. Example 9 demonstrates that if oil is used in a reaction mixture according to the invention, an even stronger meat flavour is obtained.

**Table 3**

| Exp nr | Method CSC Torque | T | Time (min) | Nuc-YEP (Wt%) | GSH-YEP (Wt%) | Lactic acid (Wt%) | Oil* (Wt%) | Total Water** (Wt%) | Meat Flavour | Off Flavour |
|---|---|---|---|---|---|---|---|---|---|---|
| B | YES | 170 °C | 2' | 73.5 | 24.5 | 0 | 0 | 2 | ○ | NO |
| C | YES | 170 °C | 2' | 91 | 0 | 9 | 0 | 2 | -- | YES |
| D | YES | 170 °C | 2' | 0 | 91 | 9 | 0 | 2 | -- | YES |
| E | NO*** | 170 °C | 2' | 60 | 30 | 10 | 0 | 2 | -- | YES |
| 6 | YES | 160 °C | 3' | 60 | 30 | 10 | 0 | 2 | + | NO |
| 7 | YES | 170 °C | 2' | 60 | 30 | 10 | 0 | 2 | ++ | NO |
| 8 | YES | 180 °C | 1.5' | 60 | 30 | 10 | 0 | 2 | ++ | NO |
| 9 | YES | 170 °C | 2' | 59 | 30 | 10 | 1 | 2 | +++ | NO |
| F | YES | 170 °C | 1' | 32 | 66 | 0 | 1 | 2 | -- | YES |

\* Oil in F is sunflower oil

\*\* Total water% (w/w) in mixture due to Lactic acid (20% water, 80% Lactic acid) and added water if required to get to 2%

\*\*\* In E, no torque was applied (i.e. 0 rpm)

**Table 4**

| Exp nr | Taste |
|---|---|
| B | Very weak meat taste, good savoury taste, no off tastes |
| C | No meat taste, no savoury taste, burned - bitter off taste, |
| D | No meat taste, no savoury taste, sulfury, bad bitter off taste, |
| E | No meat taste, some savoury taste, sulfury bitter off taste |
| 6 | Some meat taste, savoury taste, weak sulfury off taste |
| 7 | Good meat taste, good savoury taste, no off tastes |
| 8 | Good meat taste, good savoury taste, some roast taste, no off flavours |
| 9 | Very good meat taste, good savoury taste no off tastes |
| F | No meat taste, little savoury taste, bitter and sufury off taste |

**Claims**

1. Method for the preparation of a flavouring, comprising the steps of:

   (i) providing a reaction mixture comprising:

      a. yeast extract comprising at least 0.5 wt.% of glycosylamine and/or derivatives thereof and at least 1.0 wt.% of thiol containing compounds, wherein the weight percentage is by weight of dry matter of the yeast extract,

b. at least 1 wt.% of mineral acid or organic acid, by weight of the reaction mixture, and

c. from 0 to 20 wt.% of water by weight of the reaction mixture;

(ii) incubating the reaction mixture at a temperature in the range of 150 to 220 °C, wherein shear is applied to the reaction mixture;

and wherein the reaction mixture is kneaded in step (ii).

2. Method according to claim 1, wherein step (i) comprises providing a first yeast extract comprising at least 0.5 wt.%, by weight of dry matter of the first yeast extract, of glycosylamine and/or derivatives thereof and a second yeast extract comprising at least 1.0 wt.% of thiol containing compounds, by weight of dry matter of the second yeast extract.

3. Method according to claim 2, wherein the first yeast extract comprises at least 5 wt.%, more preferably at least 10 wt.% by weight of dry matter of yeast extract of glycosylamine and/or derivatives thereof and the second yeast extract comprises at least 2 wt%, more preferably at least 3 wt%, even more preferably at least 10 wt% of thiol-containing compounds by weight of dry matter of the yeast extract.

4. Method according to any one of the preceding claims, wherein the glycosylamine and/or derivatives thereof contains a ribose moiety, preferably wherein the glycosylamine and/or derivatives thereof is a ribonucleotide and/or ribonucleoside.

5. Method according to any one of the preceding claims, wherein the thiol containing compounds are glutathione, cysteine, and/or cysteine-containing dipeptides, preferably glutathione.

6. Method according to any one of the preceding claims, wherein the reaction mixture comprises at least 1 wt.% of an organic acid, wherein the organic acid has a first dissociation constant ($pK_a$) at 25°C in water of 4.35 or less, preferably 4.1 or less, more preferably 4.0 or less and even more preferably 3.9 or less.

7. Method according to any one of the preceding claims, wherein the reaction mixture comprises at least 1 wt.% of an organic acid, preferably an organic acid selected from the group consisting of lactic acid, malic acid, citric acid, tartaric acid, succinic acid, and ascorbic acid.

8. Method according to any one of the preceding claims wherein the incubated reaction mixture has an acidity such that a test solution consisting of 1 wt.% of the incubated reaction mixture and 0.5 wt.% of sodium chloride in water has a pH in the range of from 3.5 to 6.0, more preferably in the range of from 4.0 to 5.0 at 20 °C.

9. Method according to any one of the preceding claims wherein the reaction mixture in step ii) is incubated with a reaction time sufficient for the flavouring to develop.

10. Method according to any of the preceding claims, wherein the reaction mixture is incubated for a time t (minutes) according to the formula:
    $t = 240000 \cdot e^{-bT}$ where: $150°C \leq T \leq 220°C$, and $0.06 \leq b \leq 0.075$.

11. Method according to any one of the preceding claims wherein the reaction mixture in step ii) is incubated in an extruder, more preferably in a twin-screw extruder.

12. Method according to any one of the preceding claims wherein the reaction mixture in step ii) is plasticised.

13. Flavouring obtainable by a method according to any one or more of claims 1 to 12.

14. Natural flavouring composition according to claim 13 comprising yeast extract comprising:

    i. at least 20 mg/g of ribonucleotides,
    ii. at least 20 mg/g of organic acids,
    iii. at least 0.1 mg/g of glutathione (sum of reduced and oxidized)
    iv. preferably at least 1 mg/g of pyroglutamate,

v. preferably at least 1 mg/g of cyclo-cysteinyl-glycine,

and wherein a 1 wt.% solution of said composition in water also comprising 0.5 wt.% of sodium chloride has a pH in the range of 3.5 to 6 at 20 °C.

**15.** Natural flavouring composition according to claim 13 or 14 wherein the composition is in a glassy state.

**Patentansprüche**

**1.** Verfahren zur Herstellung eines Aromastoffs, umfassend die Schritte:

(i) Bereitstellen einer Reaktionsmischung, umfassend:

a. Hefeextrakt, der mindestens 0,5 Gew.-% Glycosylamin und/oder Derivate davon und mindestens 1,0 Gew.-% thiolhaltige Verbindungen umfasst, wobei sich der Gewichtsprozentsatz auf das Gewicht der Trockenmasse des Hefeextrakts bezieht,
b. mindestens 1 Gew.-% Mineralsäure oder organische Säure, bezogen auf das Gewicht der Reaktionsmischung, und
c. 0 bis 20 Gew.-% Wasser, bezogen auf das Gewicht der Reaktionsmischung;

(ii) Inkubieren der Reaktionsmischung bei einer Temperatur im Bereich von 150 bis 220°C, wobei auf die Reaktionsmischung Scherung ausgeübt wird;

und wobei die Reaktionsmischung im Schritt (ii) geknetet wird.

**2.** Verfahren nach Anspruch 1, wobei Schritt (i) das Bereitstellen eines ersten Hefeextrakts, umfassend mindestens 0,5 Gew.-%, bezogen auf das Gewicht der Trockenmasse des ersten Hefeextrakts, Glycosylamin und/oder Derivate davon, und eines zweiten Hefeextrakts, umfassend mindestens 1,0 Gew.-% thiolhaltige Verbindungen, bezogen auf das Gewicht der Trockenmasse des zweiten Hefeextrakts, umfasst.

**3.** Verfahren nach Anspruch 2, wobei der erste Hefeextrakt mindestens 5 Gew.-%, bevorzugter mindestens 10 Gew.-%, bezogen auf das Gewicht der Trockenmasse des Hefeextrakts, Glycosylamin und/oder Derivate davon, und der zweite Hefeextrakt mindestens 2 Gew.-%, bevorzugter mindestens 3 Gew.-%, noch bevorzugter mindestens 10 Gew.-% thiolhaltige Verbindungen, bezogen auf das Gewicht der Trockenmasse des Hefeextrakts, umfasst.

**4.** Verfahren nach irgendeinem der vorhergehenden Ansprüche, wobei das Glycosylamin und/oder Derivate davon eine Riboseeinheit enthält, wobei das Glycosylamin und/oder die Derivate davon vorzugsweise ein Ribonukleotid und/oder Ribonukleosid ist.

**5.** Verfahren nach irgendeinem der vorhergehenden Ansprüche, wobei die thiolhaltigen Verbindungen Glutathion, Cystein und/oder cysteinhaltige Dipeptide, vorzugsweise Glutathion, sind.

**6.** Verfahren nach irgendeinem der vorhergehenden Ansprüche, wobei die Reaktionsmischung mindestens 1 Gew.-% einer organischen Säure umfasst, wobei die organische Säure eine erste Dissoziationskonstante ($pK_a$) bei 25°C in Wasser von 4,35 oder weniger, vorzugsweise 4,1 oder weniger, bevorzugter 4,0 oder weniger und noch bevorzugter 3,9 oder weniger, aufweist.

**7.** Verfahren nach irgendeinem der vorhergehenden Ansprüche, wobei die Reaktionsmischung mindestens 1 Gew.-% einer organischen Säure umfasst, vorzugsweise einer organischen Säure, ausgewählt aus der Gruppe, bestehend aus Milchsäure, Äpfelsäure, Zitronensäure, Weinsäure, Bernsteinsäure und Ascorbinsäure.

**8.** Verfahren nach irgendeinem der vorhergehenden Ansprüche, wobei die inkubierte Reaktionsmischung einen solchen Säuregehalt aufweist, dass eine Testlösung, bestehend aus 1 Gew.-% der inkubierten Reaktionsmischung und 0,5 Gew.-% Natriumchlorid in Wasser, bei 20°C einen pH-Wert in dem Bereich von 3,5 bis 6,0, bevorzugter in dem Bereich von 4,0 bis 5,0, aufweist.

**9.** Verfahren nach irgendeinem der vorhergehenden Ansprüche, wobei die Reaktionsmischung im Schritt ii) in einer Reaktionszeit inkubiert wird, die ausreicht, damit sich der Aromastoff entwickelt.

**10.** Verfahren nach einem der vorhergehenden Ansprüche, wobei die Reaktionsmischung in einer Zeit t (Minuten) gemäß der Formel

$t = 240000 \cdot e^{-bT}$, wobei: $150°C \leq T \leq 220°C$ und $0,06 \leq b \leq 0,075$ ist, inkubiert wird.

**11.** Verfahren nach irgendeinem der vorhergehenden Ansprüche, wobei die Reaktionsmischung im Schritt ii) in einem Extruder, bevorzugter in einem Doppelschneckenextruder, inkubiert wird.

**12.** Verfahren nach irgendeinem der vorhergehenden Ansprüche, wobei die Reaktionsmischung im Schritt ii) plastifiziert wird.

**13.** Aromastoff, erhältlich durch ein Verfahren nach irgendeinem oder mehreren der Ansprüche 1 bis 12.

**14.** Natürliche Aromastoffzusammensetzung nach Anspruch 13, umfassend Hefeextrakt, umfassend:

    i. mindestens 20 mg/g Ribonukleotide,
    ii. mindestens 20 mg/g organische Säuren,
    iii. mindestens 0,1 mg/g (Summe von reduziertem und oxidiertem) Glutathion,
    iv. vorzugsweise mindestens 1 mg/g Pyroglutamat,
    v. vorzugsweise mindestens 1 mg/g Cyclocysteinylglycin,

und wobei eine 1-gew.-%ige Lösung der Zusammensetzung in Wasser, die außerdem 0,5 Gew.-% Natriumchlorid umfasst, bei 20°C einen pH-Wert in dem Bereich von 3,5 bis 6 aufweist.

**15.** Natürliche Aromastoffzusammensetzung nach Anspruch 13 oder 14, wobei die Zusammensetzung in einem glasigen Zustand vorliegt.

## Revendications

**1.** Procédé pour la préparation d'un arôme, comprenant les étapes de:

(i) fourniture d'un mélange réactionnel comprenant:

a. un extrait de levure comprenant au moins 0,5 % en poids de glycosylamine et/ou de dérivés de celle-ci et au moins 1,0 % en poids de composés contenant des thiols, où le pourcentage en poids est en poids de matière sèche de l'extrait de levure,
b. au moins 1 % en poids d'acide minéral ou d'acide organique, en poids du mélange réactionnel, et
c. de 0 à 20 % en poids d'eau en poids du mélange réactionnel;

(ii) incubation du mélange réactionnel à une température dans la plage de 150 à 220°C, où un cisaillement est appliqué au mélange réactionnel;

et où le mélange réactionnel est malaxé dans l'étape (ii).

**2.** Procédé selon la revendication 1, où l'étape (i) comprend la fourniture d'un premier extrait de levure comprenant au moins 0,5 % en poids, en poids de matière sèche du premier extrait de levure, de glycosylamine et/ou de dérivés de celle-ci et d'un deuxième extrait de levure comprenant au moins 1,0 % en poids de composés contenant des thiols, en poids de matière sèche du deuxième extrait de levure.

**3.** Procédé selon la revendication 2, où le premier extrait de levure comprend au moins 5 % en poids, de préférence encore au moins 10 % en poids de matière sèche d'extrait de levure de glycosylamine et/ou de dérivés de celle-ci et le deuxième extrait de levure comprend au moins 2 % en poids, de préférence encore au moins 3 % en poids, de préférence encore au moins 10 % en poids de composés contenant des thiols en poids de matière sèche de l'extrait de levure.

**4.** Procédé selon l'une quelconque des revendications précédentes, où la glycosylamine et/ou les dérivés de celle-ci contiennent un fragment ribose, de préférence où la glycosylamine et/ou les dérivés de celle-ci est un ribonucléotide et/ou un ribonucléoside.

5. Procédé selon l'une quelconque des revendications précédentes, où les composés contenant des thiols sont le glutathion, la cystéine et/ou des dipeptides contenant de la cystéine, de préférence le glutathion.

6. Procédé selon l'une quelconque des revendications précédentes, où le mélange réactionnel comprend au moins 1 % en poids d'un acide organique, où l'acide organique a une première constante de dissociation ($pK_a$) à 25°C dans l'eau de 4,35 ou moins., de préférence de 4,1 ou moins, de préférence encore de 4,0 ou moins et de préférence encore de 3,9 ou moins.

7. Procédé selon l'une quelconque des revendications précédentes, où le mélange réactionnel comprend au moins 1 % en poids d'un acide organique, de préférence un acide organique choisi dans le groupe consistant en l'acide lactique, l'acide malique, l'acide citrique, l'acide tartrique, l'acide succinique et l'acide ascorbique.

8. Procédé selon l'une quelconque des revendications précédentes, où le mélange réactionnel incubé a une acidité telle qu'une solution d'essai consistant en 1 % en poids du mélange réactionnel incubé et 0,5 % en poids de chlorure de sodium dans l'eau a un pH dans la plage de 3,5 à 6,0, de préférence encore dans la plage de 4,0 à 5,0 à 20°C.

9. Procédé selon l'une quelconque des revendications précédentes où le mélange réactionnel dans l'étape ii) est incubé avec une durée de réaction suffisant pour que l'arôme se développe.

10. Procédé selon l'une quelconque des revendications précédentes, où le mélange réactionnel est incubé pendant une durée t (minutes) selon la formule:
    $t = 240000.e^{-bT}$ où: 150°C $\leq$ T $\leq$ 220°C, et 0,06 $\leq$ b $\leq$ 0,075.

11. Procédé selon l'une quelconque des revendications précédentes où le mélange réactionnel dans l'étape ii) est incubé dans une extrudeuse, de préférence encore dans une extrudeuse à deux vis.

12. Procédé selon l'une quelconque des revendications précédentes où le mélange réactionnel dans l'étape ii) est plastifié.

13. Arôme pouvant être obtenu par un procédé selon l'une quelconque ou plusieurs des revendications 1 à 12.

14. Composition aromatisante naturelle selon la revendication 13 comprenant un extrait de levure comprenant:

    i. au moins 20 mg/g de ribonucléotides,
    ii. au moins 20 mg/g d'acides organiques,
    iii. au moins 0,1 mg/g de glutathion (somme de réduit et oxydé)
    iv. de préférence au moins 1 mg/g de pyroglutamate,
    v. de préférence au moins 1 mg/g de cyclo-cystéinyl-glycine, et où une solution à 1 % en poids de ladite composition dans l'eau comprenant également 0,5 % en poids de chlorure de sodium a un pH dans la plage de 3,5 à 6 à 20°C.

15. Composition aromatisante naturelle selon la revendication 13 ou 14, où la composition est dans un état vitreux.

EP 4 142 519 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003169627 A
- JP 2016174587 A
- WO 2010037783 A
- US 2016249649 A
- JP 2007259744 B

**Non-patent literature cited in the description**

- **MOTTRAM et al.** *J.Braz. Chem.Soc.,* 1998, vol. 9, 261
- **RICHARD J. SIMPSON.** Proteins and Proteomics. CSHL Press, 2003
- **S. H. PEIGHAMBARDOUST ; A. J. VAN DER GOOT ; R.J. HAMER ; R. M. BOOM.** *Cereal Chemistry,* vol. 81 (6), 714-721